# FASCICULE DE BREVET EUROPEEN

(11) **EP 0 287 416 B1**
(45) Date de publication et mention de la délivrance du brevet: **27.07.1994**
(21) Numéro de dépôt: 88400738.6
(22) Date de dépôt: 25.03.1988
(51) Int. Cl.: C08F 8/28, C03C 27/00

(54) **Procédé de fabrication d'un polyvinylbutyral plastifié pour le collage d'une embase sur un vitrage et produits obtenus**
Verfahren zur Herstellung von plastiziertem Polyvinylbutyral für die Leimung von Stützplatten auf eine Scheibe und hergestellte Produkte
Process for the manufacture of masticated polyvinyl butyral for the bonding of a supporting bed to a screen, and products obtained

(30) Priorité: 02.04.1987 FR 8704620
(43) Date de publication de la demande: 19.10.1988
(73) Titulaire: SAINT-GOBAIN VITRAGE INTERNATIONAL, 92400 Courbevoie (FR)
(72) Inventeur: Degeilh, Robert, F-78560 Le Port Marly (FR); Dages, Daniel, F-78130 Les Mureaux (FR)
(74) Mandataire: Muller, René

(56) Documents cités:
- EP-A- 0 088 013
- EP-A- 0 174 479
- EP-A- 0 174 480
- FR-A- 2 568 573

## Description

L'invention concerne la fabrication d'un polyvinylbutyral utilisable notamment pour le collage d'une embase sur un vitrage et en particulier une embase destinée à la fixation d'un rétroviseur intérieur sur un pare-brise.

Le polyvinylbutyral (PVB) plastifié à l'aide de plastifiants adéquats est connu pour être utilisé sous forme de feuilles en tant qu'intercalaires pour des vitrages feuilletés. Il est aussi utilisé pour le collage sur les feuilles de verre, notamment des embases de rétroviseurs. Cette dernière application nécessite des propriétés différentes des propriétés nécessitées pour l'application du PVB en tant qu'intercalaire entre deux feuilles de verre. En particulier le PVB plastifié pour collage des embases doit présenter une grande rigidité, une tenue à température élevée, c'est-à-dire d'environ 80°C, une très bonne adhésion étant donné les efforts auxquels l'embase peut être soumise notamment lors de réglage du rétroviseur d'un véhicule et ceci dans des conditions de température très variées.

On connait du document FR-A-2 568 573 un procédé de fabrication de polyvinylbutyral apte à être utilisé en tant qu'intercalaire dans un vitrage feuilleté. Dans ce procédé, on fabrique un polyvinylbutyral présentant un taux d'hydroxyle compris entre 17,5 et 20,1 %. Ce procédé ne permet pas d'obtenir un polyvinylbutyral entièrement satisfaisant pour le collage d'embases de rétroviseurs.

Les documents EP-A-174 479 et EP-A-174 480 décrivent également des procédés de fabrication d'un polyvinylbutyral destiné à être utilisé en tant qu'intercalaire dans des vitrages feuilletés.

Les polyvinylbutyrals connus et utilisés pour le collage des embases de rétroviseurs ne donnent pas entière satisfaction, en particulier la résistance à l'arrachement, à température élevée, peut être insuffisante.

L'invention propose un nouveau polyvinylbutyral plastifié qui présente les propriétés requises pour une utilisation en tant que matériau de collage des embases sur les vitrages et en particulier les embases de rétroviseurs intérieurs de véhicules de transport.

Conformément à l'invention, on prépare le polyvinylbutyral par réaction d'un alcool polyvinylique présentant un taux d'hydrolyse élevé, supérieur à 95 % et de préférence de l'ordre de 98 %, de haute viscosité, supérieure à 50 mPas (centipoises) selon la norme DIN 53015, avec une quantité d'aldéhyde telle que le taux d'hydroxyle du polyvinylbutyral obtenu soit compris entre 22 et 26 % et de préférence entre 23 et 25 %, la réaction s'effectuant en présence d'un catalyseur acide et d'un émulsifiant choisi de préférence parmi le dioctylsulfosuccinate de sodium et un sulfate d'alkylphénol éthoxylé de formule : 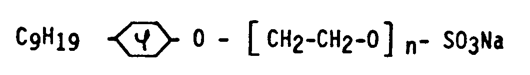
avec n = 6 ou 7.

Selon une caractéristique de l'invention, le procédé utilise les opérations décrites dans la publication de brevet français 2 547 589. Ainsi avantageusement, la résine de PVB est obtenue de la façon suivante : on Incorpore à la solution aqueuse comprenant 8 à 15 % en poids d'alcool polyvinylique hydrolysé à 98 % environ et présentant une viscosité supérieure à 50 centipoises, et de préférence comprise entre 50 et 60 mPas (centipoises)(selon la norme DIN 53015), un catalyseur acide et l'émulsifiant , on introduit dans le mélange obtenu, maintenu entre 5 et 12°C, et sous agitation, de l'aldéhyde butyrique en quantité telle qu'elle corresponde à l'obtention d'un PVB présentant de 22 à 26 % et de préférence de 23 à 25 %, l'introduction s'effectuant progressivement pendant une durée telle que le PVB précipite entre 10 et 90 minutes après le début de cette introduction, on maintient le mélange sous agitation pendant une durée supérieure à 30 minutes à une température de 8 à 15°C, on élève ensuite la température jusqu'à une valeur comprise entre 60 et 80°C en un laps de temps compris entre une heure et demie et quatre heures, on Incorpore une base dans le mélange jusqu'à obtention d'un pH d'environ 7, on maintient la température pendant une durée égale ou supérieure à 5 minutes, on sépare le PVB précipité du mélange et on le lave.

A la résine de PVB obtenue, on ajoute le plastifiant. La quantité de plastifiant s'effectue selon une caractéristique de l'invention à raison de 20 à 25 parties de plastifiant pour 100 parties de résine.

Les plastifiants convenables sont ceux décrits par exemple dans les publications de brevets européens 0 011 577 et 0 047 215 : ce sont notamment l'adipate d'octyle et de benzyle, un mélange de cet adipate d'octyle et de benzyl avec l'adipate de n-hexyle.

Le mélange de la résine et du plastifiant est extrudé en forme de bandelettes sous des épaisseurs pouvant varier de 0,3 à 1 mm environ.

Les bandelettes découpées aux dimensions désirées sont utilisées pour le collage des embases sur les vitrages, ces embases étant généralement des embases métalliques par exemple en acier, en nickel, en aluminium, en un alliage métallique, etc...

D'autres caractéristiques et avantages de l'invention apparaitront dans la description suivante d'exemples de fabrication.

### EXEMPLE 1

On prépare une solution aqueuse à partir de 30 kg d'alcool polyvinylique (PVA) et d'eau pour obtenir une solution de PVA à 10 %. Le PVA est hydrolysé à 98 %, sa masse moléculaire est de 220 000 environ et sa viscosité de 56 mPas (centipoises) environ. La solution de PVA est refroidie à 10°C et on y ajoute 2,65 kg d'acide chlorhydrique de densité 1,18 en tant que catalyseur et 50 g de dioctylsulfosuccinate de sodium en tant qu'émulsifiant. Au mélange, on ajoute en 30 minutes, 16,0 kg d'aldéhyde butyrique, de façon à obtenir un taux d'hydroxyle de 23% pour le PVB.

On laisse réagir 30 minutes à environ 15°C. On chauffe la suspension jusqu'à 70°C progressivement, la durée de montée en température étant d'environ 2 heures. On maintient le mélange réactionnel à cette température pendant 30 minutes et on neutralise le mélange par la quantité de soude nécessaire à l'obtention d'un pH de 7. Le produit est lavé plusieurs fois avec de l'eau à 70°C, essoré et séché.

La résine obtenue est plastifiée dans un mélangeur à grande vitesse avec un mélange d'adipate d'octyle et de benzyle (65 % en poids) et d'adipate de n-hexyle (35 % en poids). La quantité de plastifiant par rapport à la résine PVB est de 23 parties pour cent. Le mélange est extrudé en bandelettes de 5 cm de largeur et de 0,5 mm d'épaisseur.

Des échantillons sont découpés, collés sur des embases métalliques, et collés par simple pression sur le verre à 80°C pendant 8 secondes. L'assemblage ainsi réalisé est soumis aux différents tests décrits ci-après.

### Fluage à chaud

Le test est effectué sur cinq embases collées. On applique sur chacune d'elles une charge de 500 g suspendue à un bras de levier de 5 cm à une température de 90°C pendant 72 heures. Pour que le test soit positif, aucune embase ne doit être décollée.

### Test de Clivage

### Clivage normal

On applique sur l'embase collée une charge de 500 kg à une vitesse de 10 mm/min.

L'embase doit résister à une force supérieure à 50 daN.

### Clivage humide

On opère de La même façon que précédemment après avoir fait subir aux embases collées un cycle d'humidité de 72 heures à 60°C et 100 % d'humidité. L'embase doit résister à une force supérieure à 50 daN.

### Test de torsion

On fait subir à l'embase une torsion à l'aide d'une clef dynamométrique.
a) le collage doit résister à un couple de torsion d'au moins 3 kgm.
b) le collage doit résister à un couple de torsion de 2 kgm pendant 30 secondes.

Les tests auxquels sont soumis des échantillons obtenus selon l'exemple 1 donnent les résultats suivants :

| | |
|---|---|
| - test de fluage à chaud | bon |
| - clivage à 20°C | 80,8 daN |
| - clivage humide | 93,4 daN |
| - test de torsion a) | 4,8 kgm |
| test de torsion b) | bon |

### EXEMPLE 2

On opère dans les mêmes conditions que dans l'exemple 1, sauf qu'on réduit la quantité d'aldéhyde butyrique à 15,5 kg afin d'obtenir un PVB présentant un taux d'hydroxyle de 25 %.

Les résultats des tests sont les suivants :

| | |
|---|---|
| - test de fluage à chaud | bon |
| - clivage à 20°C | 75,8 daN |
| - clivage humide | 90,1 daN |
| test de torsion a) | 4,2 kgm |
| - test de torsion b) | bon |

### EXEMPLE 3

Avant de málanger dans les mêmes proportions la résine obtenue selon l'exemple 1 avec le même plastifiant, on incorpore à ce plastifiant du noir animal à raison de 1,7 parties de noir animal pour 100 parties de résine.

Les résultats des tests sont les suivants :

| | |
|---|---|
| - test de fluage à chaud | bon |
| - clivage à 20°C | 68,6 daN |
| - clivage humide | 76,5 daN |
| - test de torsion a) | 3,6 kgm |
| - test de torsion b) | bon |

Le noir animal qui procure une coloration noire au PVB plastifié ne modifie pas essentiellement ses caractéristiques.

### EXEMPLE 4

On opère de la même façon que dans l'exemple 1, sauf qu'on remplace le dioctylsulfosuccinate de sodium par un sulfate d'alkylphénol éthoxylé dont la formule a déja été citée ci-dessus.

Les résultats des tests sont les suivants :

| | |
|---|---|
| - test de fluage à chaud | bon |
| - clivage à 20°C | 75,2 daN |
| - clivage humide | 72,1 daN |
| - test de torsion a) | 4,5 kgm |
| - test de torsion b) | bon |

### EXEMPLE COMPARATIF 1

On opère comme dans l'exemple 1 sauf que le PVA hydroxylé à 98 % présente une viscosité de 28 mPas (centipoises).

| | |
|---|---|
| - test de fluage à chaud | mauvais |
| - clivage à 20°C | 21,4 daN |
| - clivage humide | 36,2 daN |
| - test de torsion a) | 1,1 kgm |
| - test de torsion b) | mauvais |

L'utilisation d'un PVA de viscosité courante ne procure pas les caractéristiques désirées pour l'application au collage des embases de rétroviseurs.

### EXEMPLE COMPARATIF 2

On opère comme dans l'exemple 1 sauf que la quantité d'aldéhyde butyrique utilisée dans la réaction est telle que le taux d'hydroxyle du PVB obtenu est de 20 %.

| | |
|---|---|
| - test de fluage à chaud | bon |
| - clivage à 20°C | 71,2 daN |
| - clivage humide | 90,6 daN |
| - test de torsion a) | 2,0 kgm |
| - test de torsion b) | mauvais |

L'utilisation d'une quantité d'aldéhyde butyrique nécessaire à l'obtention d'un PVB à un taux d'hydroxyle inférieur à 22 % ne procure pas les caractéristiques désirées pour l'application.

Lorsque la quantité d'aldéhyde butyrique utilisée correspondant à un taux d'hydroxyle pour le PVB supérieur à 26 %, le produit final obtenu est trop raide, sa mise en oeuvre est difficile et en particulier le collage n'est pas satisfaisant.

## Revendications

1. Procédé de fabrication d'un polyvinylbutyral plastifié utilisable notamment pour le collage d'une embase sur un vitrage, en particulier une embase de rétroviseur, dans lequel la résine de polyvinylbutyral est obtenue par réaction de l'aldéhyde butyrique sur de l'alcool polyvinylique, l'alcool polyvinylique présente un taux d'hydrolyse supérieur à 95 %, en présence d'un catalyseur acide et d'un émulsifiant caractérisé en ce que la viscosité de l'alcool polyvinylique est supérieure à 50 mPas (centipoises), et en ce que la quantité d'aldéhyde butyrique est telle que le taux d'hydroxyle du polyvinylbutyral obtenu soit compris entre 22 et 26 %.

2. Procédé selon la revendication 1, caractérisé en ce que la quantité d'aldéhyde butyrique correspond à l'obtention d'un polyvinylbutyral présentant un taux d'hydroxyle de 23 à 25 %.

3. Procédé selon la revendication 1, caractérisé en ce que l'émulsifiant est choisi parmi le dioctylsulfosuccinate de sodium et un sulfate d'alkyl phénol éthoxylé de formule : 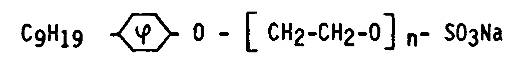 avec n = 6 ou 7.

4. Procédé selon une des revendications 1 ou 2, caractérisé en ce que la résine de PVB est mélangée avec le plastifiant à raison de 20 à 25 parties de plastifiant pour 100 parties de résine.

5. Procédé selon une des revendications 1 à 3, caractérisé en ce que le plastifiant est de l'adipate d'octyle et de benzyle.

6. Procédé selon une des revendications 1 à 4, caractérisé en ce que le plastifiant est un mélange d'adipate d'octyle et de benzyle et d'adipate de di-n-hexyle.

7. Procédé selon une des revendications 1 à 4, caractérisé en ce qu'on incorpore au plastifiant du noir animal.

8. Procédé selon une des revendications 1 à 7, caractérisé en ce qu'on incorpore à une solution aqueuse comprenant 8 à 15 % en poids d'alcool polyvinylique hydrolysé à 98 % environ, présentant une viscosité comprise entre 50 mPas (centipoises) et 60 mPas (centipoises), un catalyseur acide et un émulsifiant, on introduit dans le mélange obtenu, maintenu entre 5 et 12°C, de l'aldéhyde butyrique, l'introduction s'effectuant progressivement pendant une durée telle que le PVB précipite entre 10 et 90 minutes après le début de cette introduction, la quantité d'aldéhyde butyrique introduite correspondant à l'obtention d'un polyvinylbutyral présentant de 22 à 26 % , et de préférence de 23 à 25 % d'hydroxyle, on maintient le mélange sous agitation pendant une durée supérieure à 30 minutes à une température de 8 à 15°C, on élève la température jusqu'à une valeur comprise entre 60 et 80°C, en un laps de temps compris entre 1 heure et demie et quatre heures, on incorpore une base dans le mélange jusqu'à obtention d'un pH d'environ 7, on maintient la température pendant une durée égale ou supérieure à 5 minutes, on sépare le PVB précipité du mélange et on le lave.

9. Bande en polyvinylbutyral plastifié caractérisée en ce que le polyvinylbutyral plastifié est obtenu selon une des revendications 1 à 8.

10. Application de la bande en polyvinylbutyral plastifié selon la revendication 9 au collage d'une embase sur un vitrage, notamment une embase de rétroviseur, l'épaisseur de la bande étant comprise entre 0,3 et 1 mm.

## Claims

1. A process for the manufacture of plasticized polyvinyl butyral capable of being used inter alia for the gluing of a base to a window, in particular a rearview mirror base, in which the polyvinyl butyral resin is obtained by the reaction of butyric aldehyde with polyvinyl alcohol, the polyvinyl alcohol having a rate of hydrolysis in excess of 95 % in the presence of an acid catalyst and of an emulsifier, characterized in that the viscosity of the polyvinyl alcohol is greater than 50 mPas (centipoises) and in that the quantity of butyric aldehyde is such that the hydroxyl rate of the polyvinyl butyral obtained is comprised between 22 and 26 %.

2. A process according to claim 1, characterized in that the quantity of butyric aldehyde corresponds to the obtention of a polyvinyl butyral having a hydroxyl rate of 23 to 25 %.

3. A process according to claim 1, characterized in that the emulsifier is chosen from sodium di-octyl sulphosuccinate and ethoxylated alkylphenol sulphate having the following formula: 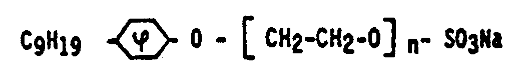 where n = 6 or 7.

4. A process according to either of claims 1 or 2, characterized in that the PVB resin is mixed with the plasticizer at the rate of 20 to 25 parts of plasticizer to 100 parts of resin.

5. A process according to any one of claims 1 to 3, characterized in that the plasticizer is octyl adipate and benzyl adipate.

6. A process according to any one of claims 1 to 4, characterized in that the plasticizer is a mixture of octyl adipate and benzyl adipate and of di-n-hexyl adipate.

7. A process according to any one of claims 1 to 4, characterized in that animal charcoal is added to the plasticizer.

8. A process according to any one of claims 1 to 7, characterized in that there is added an aqueous solution comprising 8 to 15 % by weight of polyvinyl alcohol hydrolysed to about 98 %, having a viscosity comprised between 50 mPas (centipoises) and 60 mPas (centipoises), an acid catalyst and an emulsifier; there is introduced into the mixture obtained, maintained at between 5 and 12°C, butyric aldehyde, such introduction being effected progressively over a period such that the PVB precipitates between 10 and 90 minutes after the start of such introduction, the quantity of butyric aldehyde introduced corresponding to the obtention of polyvinyl butyral having 22 to 26 % and preferably 23 to 25 % of hydroxyl; the mixture is maintained under agitation for a period in excess of 30 minutes at a temperature of 8 to 15°C; the temperature is raised to a value comprised between 60 and 80°C within a period of time comprised between one and a half hours and four hours; a base is added to the mixture until there is obtained a pH of about 7; the temperature is maintained for a period of 5 minutes or more; the precipitated PVB is separated from the mixture and washed.

9. A strip of plasticized polyvinyl butyral characterized in that the plasticized polyvinyl butyral is obtained according to one of claims 1 to 8.

10. Application of the strip of plasticized polyvinyl butyral according to claim 9 to the gluing of a base to a window, in particular a base for a rearview mirror, the thickness of the strip being comprised between 0.3 and 1 mm.

## Patentansprüche

1. Verfahren zur Herstellung eines plastifizierten Polyvinylbutyrals, insbesondere für das Ankleben einer Befestigungsfläche, bevorzugterweise einer Befestigungsfläche für einen Rückspiegel, auf einer Glasscheibe, in welchem das Polyvinylbutyralharz durch Umsetzung von Butyraldehyd mit Polyvinylalkohol mit einem Hydrolysegrad von über 95 % in Gegenwart eines sauren Katalysators und eines Emulgators erhalten wird, **dadurch gekennzeichnet**, **daß** die Viskosität des Polyvinylalkohols über 50 mPa·s (cP) liegt **und daß** die Menge des Butyraldehyds derart ist, daß der Hydroxylanteil des hergestellten Polyvinylbutyrals 22 bis 26 % beträgt.

2. Verfahren nach Anspruch 1, **dadurch gekennzeichnet**, **daß** die Menge des Butyraldehyds der Herstellung eines Polyvinylbutyrals entspricht, das einen Hydroxylanteil von 23 bis 25 % aufweist.

3. Verfahren nach Anspruch 1, **dadurch gekennzeichnet, daß** der Emulgator aus Natriumdioctylsulfosuccinat und einem ethoxylierten Alkylphenolsulfat der Formel 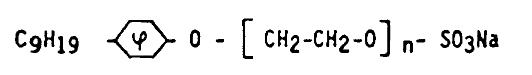 in der n = 6 oder 7 bedeutet, ausgewählt ist.

4. Verfahren nach Anspruch 1 oder 2, **dadurch gekennzeichnet, daß** das PVB-Harz mit dem Weichmacher in einem Verhältnis von 20 bis 25 Teilen Weichmacher auf 100 Teile Harz gemischt ist.

5. Verfahren nach einem der Ansprüche 1 bis 3, **dadurch gekennzeichnet, daß** der Weichmacher Octyl- und Benzyladipat ist.

6. Verfahren nach einem der Ansprüche 1 bis 4, **dadurch gekennzeichnet, daß** der Weichmacher ein Gemisch aus Octyl- und Benzyl- und Di-n-hexyladipat ist.

7. Verfahren nach einem der Ansprüche 1 bis 4, **dadurch gekennzeichnet, daß** im Weichmacher Knochenkohle eingebaut ist.

8. Verfahren nach einem der Ansprüche 1 bis 7, **dadurch gekennzeichnet, daß** in eine wäßrige Lösung, die 8 bis 15 Gew% Polyvinylalkohol enthält, der zu etwa 98 % hydrolysiert ist und eine Viskosität zwischen 50 und 60 mPa·s (cP) aufweist, ein saurer Katalysator und ein Emulgator gegeben werden und in das auf zwischen 5 und 12 °C gehaltene hergestellte Gemisch Butyraldehyd zugegeben wird, wobei die Zugabe fortlaufend während eines solchen Zeitraums erfolgt, daß das PVB in zwischen 10 und 90 Minuten nach Beginn dieser Zugabe ausfällt, die Menge des zugegebenen Butyraldehyds der Herstellung eines Polyvinylbutyrals entspricht, das 22 bis 26 und vorzugsweise 23 bis 25 % Hydroxygruppen enthält, das Gemisch bei einer Temperatur von 8 bis 15 °C während eines Zeitraums von über 30 Minuten gerührt, die Temperatur in einem Zeitraum von eineinhalb bis vier Stunden auf 60 bis 80 °C erhöht, dem Gemisch eine Base bis zur Einstellung eines pH-Werts von etwa 7 zugegeben, die Temperatur während eines Zeitraums von 5 Minuten oder länger beibehalten und das ausgefällte PVB vom Gemisch abgetrennt und gewaschen wird.

9. Band aus plastifiziertem Polyvinylbutyral, **dadurch gekennzeichnet, daß** das plastifizierte Polyvinylbutyral nach einem der Ansprüche 1 bis 8 hergestellt ist.

10. Verwendung des Bandes aus plastifiziertem Polyvinylbutyral nach Anspruch 9 zum Ankleben einer Befestigungsfläche, insbesondere einer Befestigungsfläche für einen Rückspiegel, auf einer Glasscheibe, wobei die Dicke des Bandes 0,3 bis 1 mm beträgt.
